# EUROPEAN PATENT APPLICATION

(11) **EP 1 442 791 A1**
(43) Date of publication of application: **04.08.2004**
(21) Application number: 02775487.8
(22) Date of filing: 05.11.2002
(51) Int. Cl.: B01J 23/56, B01J 23/64, C01B 3/48

(54) **METHOD FOR PREPARING CATALYST FOR CARBON MONOXIDE SHIFT REACTION**

(30) Priority: 07.11.2001 JP 2001341896
(71) Applicant: Sued-Chemie Catalysts Japan, Inc., Shibuya-ku, Tokyo 151-0053 (JP)
(72) Inventor: TESHIGAWARA, Satoshi, Shibuya-ku, Tokyo 151-0053 (JP); MATSUHISA, Toshio, Shibuya-ku, Tokyo 151-0053 (JP); ITAMI, Hirohiko, Shibuya-ku, Tokyo 151-0053 (JP)
(74) Representative: Westendorp, Michael, Dr.
(86) International application number: PCT/JP2002/011483
(87) International publication number: WO 2003/039742

(57) **Abstract**

It is an object of the present invention to provide a catalyst for the shift reaction (i.e., catalyst for converting carbon monoxide and steam into carbon dioxide and hydrogen) easily being activated, being unaffected by oxygen which may flow into the system when it is repeatedly started up and shut down, and stably serving for extended periods, and it is another object of the present invention to provide the method of preparing the same catalyst, and for these purposes there are provided a method of preparing a catalyst for the shift reaction of carbon monoxide, characterized in that it uses a carrier of a metal oxide or a compound metal oxide having a pore volume of 0.25 ml/g or more and a packed density of 1 g/ml or less, and that the carrier is impregnated with a Pt compound which does not contain halogen and sulfur as a water-soluble precursor for the Pt, and the catalyst prepared by said method.

## Description

### BACKGROUND OF THE INVENTION

### 1. Field of the Invention:

This invention relates to a catalyst for removing carbon monoxide from a reformed gas which comprises hydrogen as a main component and carbon monoxide, and is used as the fuel for a fuel cell or the like.

### 2. Description of the Prior Art:

The reformed gas, obtained by reforming a hydrocarbon or alcohol, is used as the hydrogen source for fuel cells or the like. In the case of a solid polymer type fuel cell operating at a low temperature of 100°C or lower, the platinum catalyst used as the electrode in the cell is damaged by carbon monoxide contained in the reformed gas. Once this damage of the platinum catalyst happens, it retards the reactions involving hydrogen, and greatly deteriorates power generation efficiency of the cell. It is therefore necessary to reduce the carbon monoxide content to 100 ppm or less, preferably 10 ppm or less in advance.

The carbon monoxide content is normally reduced by catalytic shift reaction, i.e., carbon monoxide is reacted with steam to form carbon dioxide and hydrogen, to several thousands ppm to 1%. This step is followed by partial oxidation with small quantities of air in the presence of a selective oxidation catalyst to reduce the carbon monoxide content to a level not harmful to the fuel cell, of the order of several ppm. In this case, it is necessary to keep the oxygen content 1 to 3 times higher than the carbon monoxide content, in order to sufficiently remove carbon monoxide, which, however, is accompanied by oxidation of hydrogen proceeding to an extent dependent on oxygen content. This greatly reduces energy efficiency, because carbon monoxide to be used to produce hydrogen by the shift reaction is wastefully oxidized. It is therefore necessary to sufficiently reduce the carbon monoxide content for the shift reaction.

These problems can be effectively solved by use of a noble metal catalyst, e.g., platinum, as disclosed by, e.g., Japanese Patent Laid-Open No. 2000-178007 and Japanese Patent No. 3215680. These catalysts, however, exhibit insufficient activity at low temperature, and are rarely investigated with the commercial shapes and reported for their effectiveness. Moreover, they are impractical, partly because of high content of platinum per unit volume of the catalyst, which tends to push up the cost.

A copper-zinc-based catalyst, which has been normally used, should be activated by reduction before use, although high in activity. The activation treatment generates heat, and should be effected for extended periods in a flow of the reducing gas in such a way to prevent temperature from exceeding the thermally allowable temperature for the catalyst. The catalyst activated may be deactivated by reoxidization with oxygen flowing into the system when it is stopped, or heat generated thereby. It is therefore necessary to prevent the oxidation by an adequate measure, e.g., purging the system with a sufficient quantity of an inert gas or cooling. A copper-zinc-based catalyst for low temperature use, having a low thermally allowable temperature, cannot be rapidly heated during the system start-up, and therefore should be heated slowly.

When only an iron-chromium-based catalyst for high temperature use is employed, on the other hand, it is difficult to reduce carbon monoxide content to 1% or less, because the shift reaction of carbon monoxide is an equilibrium reaction dependent on temperature, although heating during the initial start-up is effected more easily. As a result, a larger quantity of carbon monoxide is wastefully oxidized in the subsequent selective oxidation process to remove carbon monoxide.

As discussed above, the conventional method involves many problems to be solved, when the system operation is stopped and started repeatedly, because it needs a lot of time for starting the shift reaction.

It is already known that use of a catalyst impregnated with a noble metal, e.g., platinum, is an effective countermeasure. However, such a catalyst is insufficient in activity at low temperature of 300°C or lower as compared with a copper-zinc-based base metal oxide, and it is operated at a low SV condition or needs a larger quantity of costly noble metal to sufficiently exhibit its activity.

Another problem is poisoning of the platinum when it comes into contact with a high concentration of carbon monoxide at low temperature, which also prevents it from exhibiting its inherent activity.

### SUMMARY OF THE INVENTION

It is an object of the present invention to provide a catalyst for the shift reaction easily being activated, being unaffected by oxygen which may flow into the system when it is repeatedly started up and shut down, and stably serving for extended periods, in order to solve the above problems. It is another object of the present invention to provide a method of preparing such a catalyst.

The inventors of the present invention have reached the present invention after having extensively studied to achieve the above objects.

The present invention is specified by the matters described in from (1) to (5) below:
(1) A method of preparing a catalyst for the shift reaction of carbon monoxide which contains Pt as a major active component, characterized in that it uses a carrier of a metal oxide or a compound metal oxide having a pore volume of 0.25 ml/g or more and a packed density of 1 g/ml or less, and that the carrier is impregnated with a Pt compound which does not contain halogen and sulfur as a water-soluble precursor for the Pt.
(2) The above-described method (1), wherein the precursor of Pt compound is Pt(NH₃)₂(NO₂)₂ or Pt(NH₃)₄(OH)₂.
(3) The above-described method (1) or (2), wherein at least one element selected from the group consisting of Ce, Re and Zr is used in addition to Pt as the catalyst component for the shift reaction of carbon monoxide, and the carrier is impregnated with a compound which does not contain halogen and sulfur as a water-soluble precursor for the Ce, Re and Zr.
(4) The above-described method (3), wherein the precursor for Re with which the carrier is impregnated is a perrhenic acid, salt thereof or rhenium oxide (Re₂O₇).
(5) A catalyst for the shift reaction of carbon monoxide produced by one of the above-described methods (1) to (4).

### BEST MODE FOR CARRYING OUT THE INVENTION

The carrier for the catalyst of the present invention preferably has a large pore volume and is suited for the reaction particularly at a high SV level. It is 0.25 ml/g or more, preferably 0.4 ml/g or more.

The formed carrier to be used preferably has a packed density of 1 g/ml or less, its lower limit being not limited. The formed carrier having the pore volume and packed density each in the above range facilitates diffusion of the gases for the reaction, and reduces quantity of platinum required for the unit volume of the catalyst, resulting in improved cost performance of platinum.

The carrier is composed of a single metal oxide or a compound oxide comprising two or more types of compounds, including, but not limited to, alumina, silica, titanium oxide and zinc oxide. Its BET-determined specific surface area is not limited. The carrier may be in the form of sphere, extruded cylinder, tablet, or the like, and preferably contains a number of macropores.

The formed carrier may contain a substance other than the carrier component. For example, the carrier component may be deposited on a granular or honeycomb-shaped base.

The catalyst of the present invention is impregnated at least with platinum as the active component. The method for impregnating the carrier with platinum is not limited. For example, it may allow the carrier to absorb an aqueous solution dissolving platinum at a given concentration corresponding to quantity of moisture absorbed by the carrier, or spray an aqueous solution of platinum onto the carrier.

The useful precursors for platinum preferably do not contain halogen and sulfur compound, and include, but not limited to, dinitrodiammine platinum, tetrammineplatinum nitrate and tetrammine platinum dihydroxide, particularly preferably dinitrodiammine platinum.

The catalyst tends to show higher activity at low temperature as it is impregnated with a larger quantity of platinum. It may be impregnated with platinum at, e.g., 0.5 to 10% by weight, normally at around 1 to 5% by weight. Platinum may not exhibit sufficient performance when present at a lower content. The cost merit may not be brought for improving its performance, as its content increases beyond the above range.

It is effective for the catalyst of the present invention for the shift reaction to include cerium and rhenium in addition to platinum, particularly for improving the activity at low temperature of 300°C or lower.

The method of impregnating the carrier with cerium, rhenium or zirconium is not limited. The precursor to be used preferably does not contain halogen and sulfur compound, as is the case with that for platinum. The examples of the precursors include cerium nitrate for cerium, perrhenic acid and ammonium perrhenate for rhenium, and zirconium nitrate for zirconium. Quantity of cerium, rhenium or zirconium is not limited, but 1 to 20% by weight for cerium and zirconium, and 0.1 to 10% by weight, preferably 0.5 to 5% by weight, for rhenium. Cerium, rhenium or zirconium may not exhibit sufficient performance when present at a lower content. The content beyond the above range may not bring the cost merit for improving its performance, and hence is not desirable.

Order of impregnation of platinum, cerium, rhenium and zirconium is not limited. They may be impregnated consecutively or simultaneously by preparing a mixed aqueous solution. In any case, the catalyst may be used, after the carrier is impregnated with one or more of the above elements, dried at 110°C and fired at 400°C to 500°C, although the method of preparing the catalyst is not limited to the above.

The catalyst thus prepared may be used directly, or after being reduced. The reduction method may be of wet type with a reductant, e.g., hydrazine, or vapor-phase reduction with hydrogen gas.

The specific surface area per unit weight of the metal, determined from quantity of carbon monoxide adsorbed, is preferably 50 m²/g or more, more preferably 100 m²/g or more.

The shift reaction of carbon monoxide is an equilibrium reaction dependent on temperature, by which is meant that carbon monoxide can be removed more as reaction temperature decreases. However, decreasing reaction temperature retards the reaction velocity over the catalyst. Therefore, the catalyst that can cause the reaction at a lower temperature is more advantageous. The common copper-based catalyst for the shift reaction, e.g., copper-zinc or copper-chromium catalyst, can cause the shift reaction of carbon monoxide at as low as 150°C to 250°C, to remove carbon monoxide to several hundreds to thousands ppm. However, it is necessary to activate the copper-based catalyst, after it is charged in the reactor, in a flow of a reductant gas, e.g., hydrogen or reformed gas. The catalyst, however, is not highly resistant to heat, only withstanding around 300°C, and should be treated with the reductant gas diluted or flown at a low rate in such a way to prevent temperature from exceeding the allowable level by the heat of reaction. The required content of copper in the catalyst, which also affects time required for the activation, is around several tens percents for securing serviceability, which means the activation takes a long time.

The catalyst of the present invention for the shift reaction is much more resistant to heat than the copper-based catalyst, and can be activation-treated for a shorter time with a reductant gas, or can be used only after passing the reformed gas over the catalyst.

The catalyst of the present invention for the shift reaction of carbon monoxide can remove carbon monoxide to several thousands ppm, and is applicable to a hydrogen purification unit for fuel cells.

The reaction at a space velocity (SV), or gas flow rate per unit volume of the catalyst bed, of 1,000 hour⁻¹ or less normally needs a large quantity of catalyst, taking a long time to heat the catalyst to a desired level during the start-up period, due to increased heat capacity. The heating process may be accelerated by supplying heat from the outside by an electric heater or the like as the auxiliary heat source or increasing the temperature of the reformed gas to be fed. Rapid heating to locally cause high temperature is undesirable, because of the low thermally allowable temperature of the copper-based catalyst. The catalyst of the present invention for the shift reaction, on the other hand, can be heated more rapidly by supplying the reformed gas of higher temperature, without causing any problem even when locally heated to around 500°C, allowing the unit to start up faster.

A small quantity of air may flow into the system from the outside, when the unit is stopped, because of decreased temperature in the reactor to cause pressure drop there. Therefore, the copper-based catalyst will be deactivated, when the system is repeatedly started up and shut down for extended periods. This makes the system more complex, because of necessity for a measure to prevent contamination with oxygen. On the other hand, the hydrogen purification unit which uses the noble metal catalyst of the present invention needs no measure against inflow of a small quantity of oxygen, and can be started up and shut down much more easily.

The catalyst of the present invention for the shift reaction of carbon monoxide can work with various types of fuels, beginning with a reformed gas which reforms a natural gas by steam.

The problems resulting from contamination with oxygen are eliminated as a whole system, when it is repeatedly started up and shut down, securing stable operation of the system for extended periods.

The present invention is described more concretely by Examples and Comparative Examples, which by no means limit the present invention.

### Example 1

Spherical alumina having a pore volume of 0.45 ml/g and diameter of 3 mm was impregnated with a given quantity of mixed solution of cerium nitrate and ammonium perrhenate, dried at 110°C for 12 hours, and fired at 500°C for 3 hours. It was then impregnated with platinum using a solution of dinitrodiammine platinum dissolved in nitric acid, dried at 110°C for 12 hours, and fired at 400°C for 3 hours, to prepare the catalyst.

The catalyst thus prepared contained 2% of Pt, 2% of Re and 15% of CeO₂, based on the carrier, all percentages by weight.

Its performance was evaluated under the conditions of SV: 20,000 hour⁻¹, S/G: 1.5, CO: 9%, CO₂: 17%, CH₄: 2.9%, H₂: balance, and temperature: 200°C to 400°C.

The results are given in Table 1.

No CH₄ was observed in the product stream obtained at 200°C to 350°C.

The catalyst bed was purged with nitrogen, after the evaluation test was over, and the catalyst was oxidation-treated in a flow of air. Then, the bed was purged with nitrogen, and the reactant gas stream was passed through the bed again to evaluate performance of the oxygen-treated catalyst. This procedure was repeated 10 times. No deactivation of the catalyst was observed.

### Example 2

The catalyst was prepared in the same manner as in Example 1, except that cerium nitrate was replaced by zirconyl nitrate to have the similar composition, and tested for its performance also in the same manner.

The results are given in Table 1.

### Example 3

The catalyst was prepared in the same manner as in Example 1, except that the rhenium source was replaced by rhenium oxide (Re₂O₇) to have the similar composition, and tested for its performance also in the same manner.

The results are given in Table 1.

### Example 4

The catalyst was prepared in the same manner as in Example 1, except that the solution of dinitrodiammine platinum was replaced by an aqueous solution of tetrammine platinum hydroxide to have the similar composition, and tested for its performance also in the same manner.

The results are given in Table 1.

### Example 5

The catalyst was prepared in the same manner as in Example 1, except that the carrier packed density and platinum content were changed to 0.7 g/ml and 1.6 g/L, respectively, to have the similar composition, and tested for its performance also in the same manner.

The results are given in Table 1.

### Example 6

The catalyst was prepared in the same manner as in Example 1, except that the catalyst prepared was reduced by a wet type process using an aqueous solution of hydrazine carbonate, and tested for its performance also in the same manner.

The results are given in Table 1.

### Example 7

The catalyst was prepared in the same manner as in Example 1, except that Re was not used to have the similar composition, and tested for its performance also in the same manner.

The results are given in Table 1.

### Comparative Example 1

The catalyst was prepared in the same manner as in Example 1, except that the spherical alumina was replaced by cylindrical α-alumina having a pore volume of 0.20 ml/g and diameter and height of 3 mm, and tested for its performance also in the same manner.

The results are given in Table 1.

### Comparative Example 2

The catalyst was prepared in the same manner as in Example 1, except that the spherical alumina was replaced by formed zirconia having a pore volume of 0.20 ml/g and packed density of 1.4 g/ml, and that CeO₂ was not used, and tested for its performance also in the same manner.

The results are given in Table 1.

### Comparative Example 3

The catalyst was prepared in the same manner as in Example 1, except that the carrier was replaced by the one having a packed density of 1.5 g/ml and containing platinum at 1.6 g/L, and tested for its performance also in the same manner.

The results are given in Table 1.

### Comparative Example 4

The catalyst was prepared in the same manner as in Example 1, except that ammonium perrhenate was replaced by rhenium chloride, and tested for its performance also in the same manner.

The results are given in Table 1.

### Comparative Example 5

The catalyst was prepared in the same manner as in Example 1, except that dinitrodiammine platinum was replaced by chloroplatinic acid, and tested for its performance also in the same manner.

The results are given in Table 1.

**(Table 1)**

| | Outlet CO concentration (%) | | | | |
|---|---|---|---|---|---|
| | 200°C | 250°C | 300°C | 350°C | 400°C |
| Example 1 | 6.3 | 1.1 | 0.7 | 1.4 | 2.0 |
| Example 2 | 6.5 | 1.2 | 0.7 | 1.4 | 2.0 |
| Example 3 | 6.0 | 1.0 | 0.6 | 1.6 | 2.1 |
| Example 4 | 6.2 | 1.0 | 0.6 | 1.6 | 2.0 |
| Example 5 | 6.3 | 1.0 | 0.6 | 1.7 | 2.0 |
| Example 6 | 6.5 | 1.3 | 0.8 | 1.9 | 2.0 |
| Example 7 | 7.0 | 4.0 | 2.1 | 2.2 | 2.3 |
| Comparative Example 1 | 8.8 | 4.4 | 3.1 | 2.2 | 2.1 |
| Comparative Example 2 | 8.9 | 5.5 | 4.0 | 2.5 | 2.3 |
| Comparative Example 3 | 8.2 | 5.2 | 1.8 | 1.9 | 2.4 |
| Comparative Example 4 | 8.8 | 4.4 | 3.1 | 2.2 | 2.1 |
| Comparative Example 5 | 8.9 | 5.5 | 4.0 | 2.5 | 2.3 |

### (Advantages of the Invention)

Comparing the unit evaluation results of Examples with those of Comparative Examples clearly indicates that the present invention can provide the hydrogen purification method unaffected by oxygen which may flow into the system when it is repeatedly started up and shut down, and stably serving for extended periods.

## Claims

1. A method of preparing a catalyst for the shift reaction of carbon monoxide which contains Pt as a major active component, **characterized in that** it uses a carrier of a metal oxide or a compound metal oxide having a pore volume of 0.25 ml/g or more and a packed density of 1 g/ml or less, and that the carrier is impregnated with a Pt compound which does not contain halogen and sulfur as a water-soluble precursor for the Pt.

2. The method according to claim 1, wherein said precursor of Pt compound is Pt(NH₃)₂(NO₂)₂ or Pt(NH₃)₄(OH)₂.

3. The method according to claim 1 or 2, wherein at least one element selected from the group consisting of Ce, Re and Zr is used in addition to Pt as the catalyst component for the shift reaction of carbon monoxide, and the carrier is impregnated with a compound which does not contain halogen and sulfur as a water-soluble precursor for the Ce, Re and Zr.

4. The method according to claim 3, wherein said precursor for Re with which the carrier is impregnated is a perrhenic acid, salt thereof or rhenium oxide (Re₂O₇).

5. A catalyst for the shift reaction of carbon monoxide produced by one of the methods according to any one of Claims 1 to 4.
